# EUROPEAN PATENT SPECIFICATION

(11) **EP 0 880 411 B1**
(45) Date of publication and mention of the grant of the patent: **20.12.2000**
(21) Application number: 97903439.4
(22) Date of filing: 12.02.1997
(51) Int. Cl.: B07B 1/46, B01D 33/03

(54) **SCREEN FOR VIBRATING SEPARATOR**
SIEB FÜR SCHWINGABSCHNEIDER
TAMIS POUR SEPARATEUR VIBRANT

(30) Priority: 12.02.1996 US 598566; 21.01.1997 US 786515
(43) Date of publication of application: 02.12.1998
(60) Divisional application: 00103595.5
(73) Proprietor: Tuboscope I/P Inc., Houston, TX 77051 (US)
(72) Inventor: ADAMS, Thomas, Cole, Hockley, TX 77447 (US); SCHULTE, David, Lee, Jr., Broussard, LA 70518 (US); WALKER, Jeffrey, Earl, Lafayette, LA 70501 (US); MCCLUNG, Guy, LaMont, III, Spring, TX 77379-4578 (US); LEONE, Vincent, Dominick, Sr., Houston, TX 77069 (US); GRICHAR, Charles, Newton, Houston, TX 77009 (US); SEYFFERT, Kenneth, Wayne, Houston, TX 77018 (US)
(74) Representative: Lucas, Brian Ronald
(86) International application number: PCT/GB97/00385
(87) International publication number: WO 97/28906

(56) References cited:
- EP-A- 0 100 132
- WO-A-92/00133
- WO-A-94/15724
- WO-A-94/23849
- WO-A-97/03765
- DE-A- 2 419 770
- US-A- 3 255 885
- US-A- 5 490 598

## Description

This invention relates to a screen for use in a shale shaker, and to a method of repairing such a screen.

Vibrating screens have been employed for many years to separate particles in a wide array of industrial applications. One common application of vibrating screens is in drilling operations to separate particles suspended in drilling fluids. The screens are generally flat and are mounted generally horizontally on a vibrating mechanism or shaker that imparts either a rapidly reciprocating linear, elliptical or circular motion to the screen. Material from which particles are to be separated is poured onto a back end of the screen, usually from a pan mounted above the screen. The material generally flows toward the front end of the screen. Large particles unable to move through the screen remain on top of the screen and move toward the front of the screen where they are collected. The smaller particles and fluid flow through the screen and collects in a pan beneath the screen.

A torn screen must be replaced or repaired. To facilitate repair, the screen layers are bonded to a flat rigid or semi-rigid support panel that has a pattern of large openings, forming on the screen a plurality of small cells of wire mesh. When a tear occurs in the screen, the mesh remaining within the cell in which the tear occurred is cut out and the cell is plugged. The capacity of the screen is diminished but its life is extended. Typically, several cells of a screen can be repaired before its capacity drops far enough to require replacement.

WO-A-92/00133 discloses a flat filter screen assembly which comprises a flat frame sub-divided by flat cross pieces. A mesh is stretched across the frame and secured around the frame and along each cross piece. If part of the mesh becomes damaged in use, the relevant section can be cut out and replaced with a plug.

WO-A-94/23849 discloses a screen for separating solids from drilling fluid comprising an outer frame, a series of support members extending across the outer frame, a sheet of flat perforate material secured to the outer frame and support members, and a sheet of mesh secured to the sheet of flat perforate material. The arrangement defines a substantially flat screen. In use, damage to the screen is confined between adjacent support members or between a support member and the frame. Such a small area can be rapidly patched, albeit at the cost of some throughput.

WO-A-94/15274 discloses a three-dimensional screen assembly comprising a flat apertured plate underlying and supporting a corrugated apertured plate which in turn supports a corrugated mesh. Some of the apertures in the corrugated apertured plate extend across the ridges and valleys of the corrugations. The ridges and valleys are substantially V-shaped or sinusoidal in cross section.

Unfortunately, it is not practical to repair existing three-dimensional screens if they are damaged in certain areas and the present invention addresses this problem.

According to the present invention there is provided a screen for use in a shale shaker, which screen comprises:
(a) a support panel formed with a series of alternating substantially parallel ridges and channels, wherein at least the top of one of said ridges is substantially flat and is provided with at least one elongate opening which is wholly contained within said top of said ridge; and
(b) at least a first layer of mesh bonded to said support member, the arrangement being such that, in use, if the mesh covering said elongate opening in said top of said ridge is punctured said mesh overlying said elongate opening can be removed and the open cell formed thereby fitted with a plug.

Further features are set out in Claims 2 to 8.

The ridges and channels increase the surface area of the screen without increasing the overall dimensions of the screen, thus improving flow capacity. Additionally, with the vibration, particles tend to drop into the channels, leaving the tops of the ridges exposed to fluids for relatively unimpeded flow through the screen that further improves flow rates. Furthermore, the ridges and channels tend to assist in distributing separated particles across the screen. Uneven distribution, due to for example rolling of the screen from side to side when used on offshore platforms, degrades the flow capacity of the screen.

For a better understanding reference will now be made, by way of example, to the accompanying drawings, in which:-
Figure 1 is an exploded end view of a screen;
Figure 2 is a plan view of the screen of Figure 1 with parts removed for clarity;
Figure 3 is a plan view of an alternative embodiment of screen with parts removed for clarity;
Figure 4 is an exploded end view of the screen of Figure 3;
Figure 5 is a perspective view of an end portion of a screen similar to that shown in Figures 3 and 4 undergoing repair, but not concerning an embodiment of the present invention;
Figure 6 is a top plan view of a plug for repairing the screen of Figure 5;
Figure 7 is a cross-section of a plug of Figure 6, taken along section line 7-7;
Figure 8 is an end view of a portion of a screen similar to that shown in Figure 5 mounted to the basket of a shaker, showing a latching mechanism for securing the screen to the shaker;
Figure 9 is a side view of the screen illustrated in Figure 1;
Figures 10 and 11 are end views of screens in accordance with the present invention; and
Figure 12 is an end view of an alternative plug for use with a screen in accordance with the present invention.

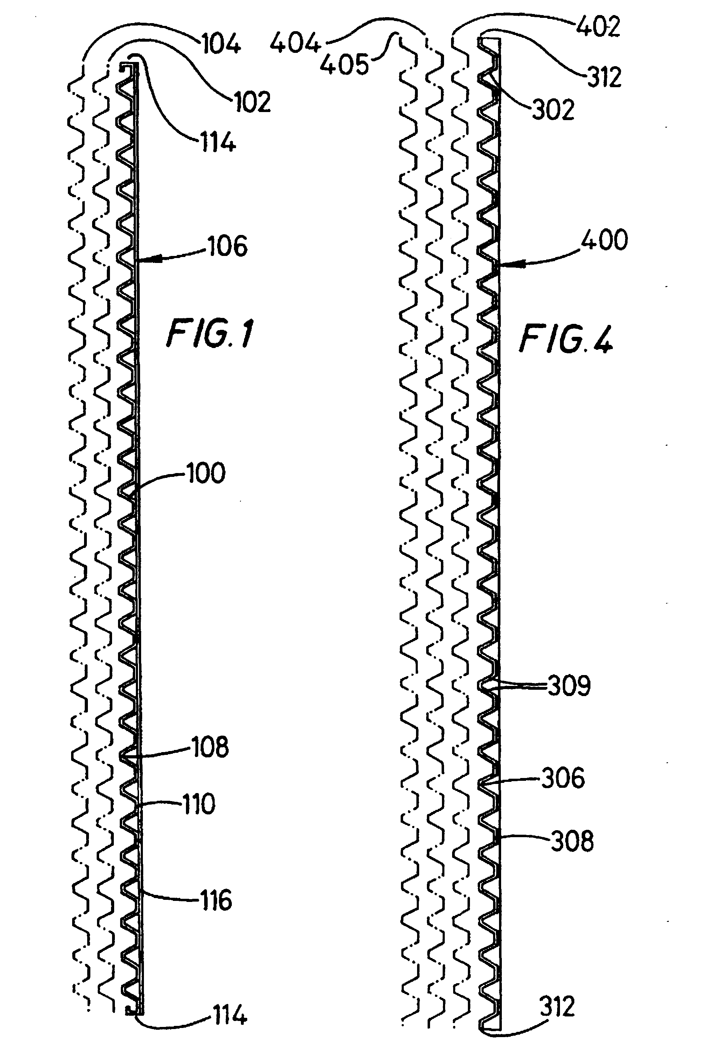

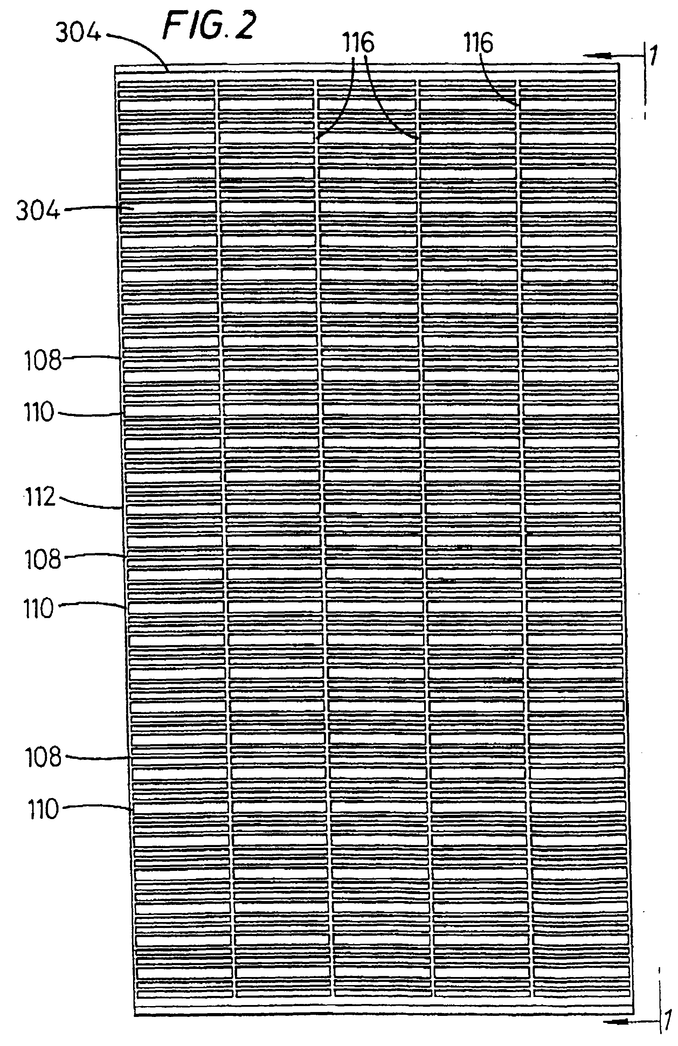

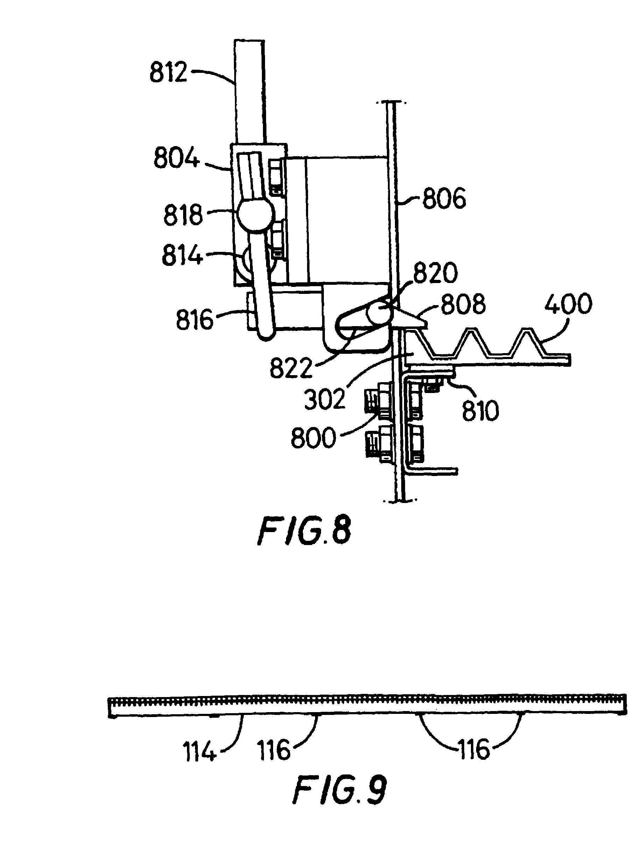

Referring to Figures 1 and 9, there is shown a screen 100 which includes a first layer 102 of wire mesh and a second layer 104 of wire mesh. Preferably, the first layer 102 is made from a web of bolting cloth grade wire mesh. The second layer 104 is a backing mesh. The first and the second layers 102, 104 are supported on a panel 106. The panel 106 is formed to create a plurality of ridges 108 running the length of the screen 100, defining therebetween a plurality of channels 110. The channels 110, which can be clearly seen in Figure 2 (in which the first layer 102 and second layer 104 of wire mesh have been omitted for clarity), run the length of the screen 100 from the back end of the screen 100 to its front end 112. Attached to each side of the screen are hook straps 114. Each hook strap 114 is bonded to the frame 106 and the first layer 102 and second layer 104. Steel straps 116 support the first and second layers 102, 104.

The screen is secured to a shaker in a well known manner by hooking around the hook straps 114 and tightening rails disposed along the edges of the basket of a shaker (not shown). A series of stringers below the screen (not shown) cause the screen to bow as the rails pivot downwardly as they are tightened.

During operation, material containing solids to be separated is poured onto the back of the screen. Solids tend to collect in the channels and move towards the front end 112 of the screen 100 when the screen is vibrated. Fluid and particles smaller than the openings in the finest layer of mesh flow through the mesh along the sides of ridges 108 and the bottoms of channels 110.

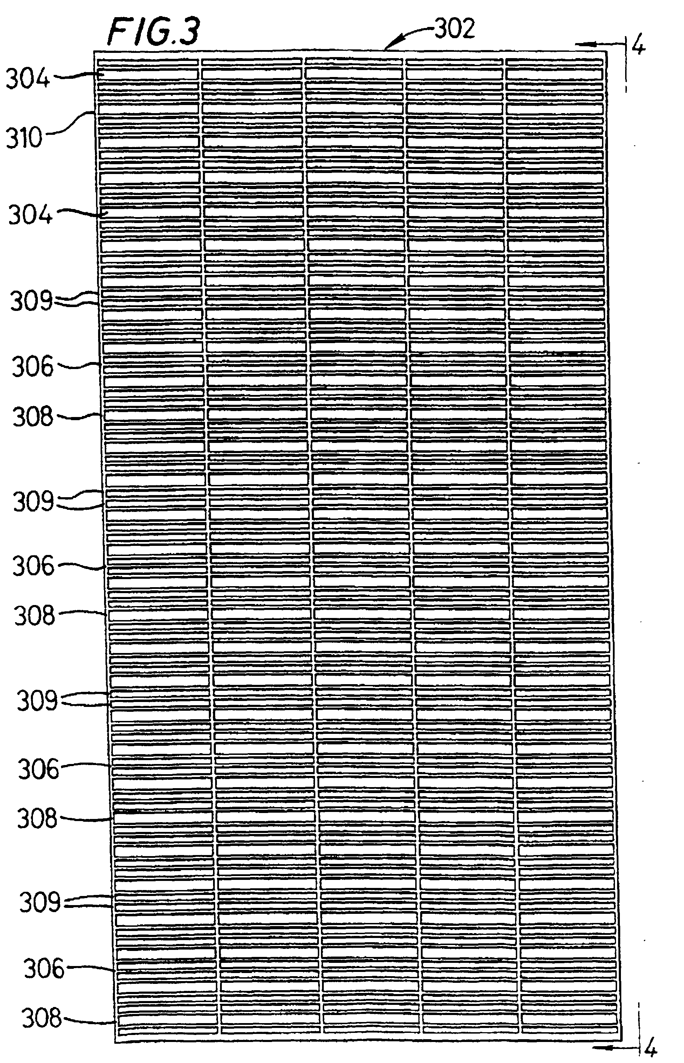

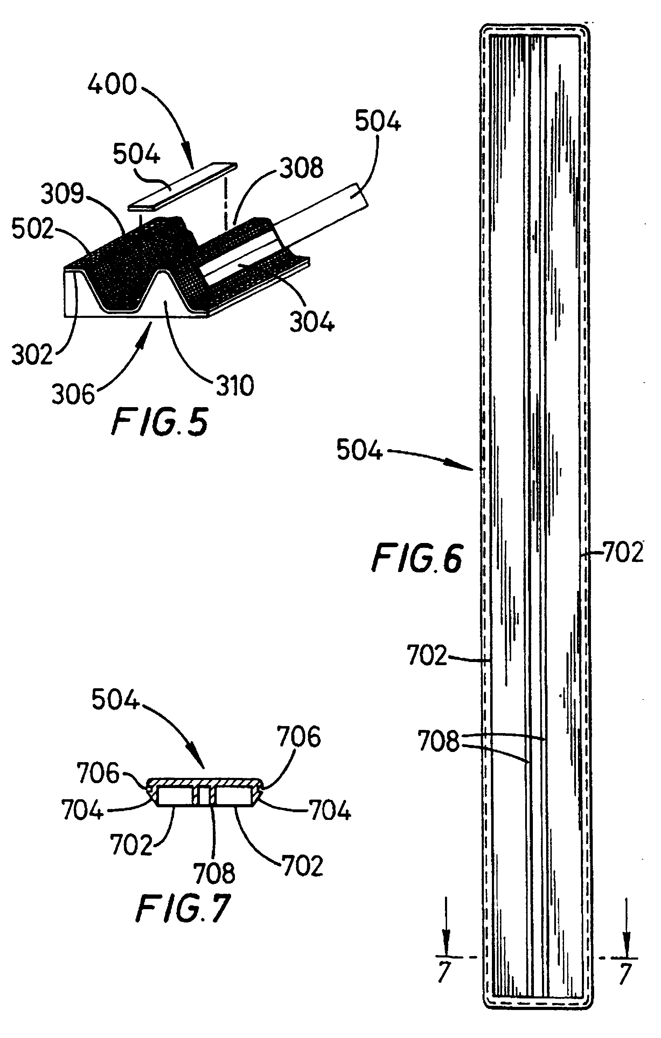

Referring now to Figures 3 and 4, in an alternate embodiment of screen 400, a first layer 402 of wire mesh, a second layer 404 of wire mesh and a third layer 405 of wire mesh (the layers 402, 404, 405 are shown only in Figure 4 exploded away from panel 302) are bonded to panel 302.

The first and second layers (402, 404) are a bolting cloth grade wire mesh. The third layer 405 is a mill grade or market grade wire mesh supporting the first and second layers 402, 404. The panel 302 is formed from a sheet of metal by punching or cutting an array of elongated, rectangular openings 304 into the sheet of metal according to a predetermined pattern. The openings have uniform size and shape. The sheet is then bent with a press or rolled into a corrugated configuration substantially as shown in Figure 4. The corrugated configuration is comprised of alternating series of triangular shaped ridges 306 and flat bottom channels 308. Each triangular ridge 306 has two substantially flat side surfaces separated by a narrow peak 309.

Along each end of the panel is bonded a frame 310. Frame 310 is contoured to fit and provide support for the ridges 306. The screen is formed so that its side edges run along the peak of a ridge 306. Terminating the sides of the screen along a ridge helps to prevent material from falling between the screen and the inside wall of a shaker basket (not shown) over which the screen is placed.

Each opening 304 is located on a flat surface of either a side of a ridge or a bottom surface of a channel. The rectangular shape of the openings allows as much of the flat surface to be cut with openings as is possible while leaving enough solid area to remain to form a grid or lattice-like structure that will retain its shape and not break during normal use.

Once the panel is formed, the first layer 402, the second layer 404 and the third layer 405 of wire mesh are heated and then bonded to the panel. The heating expands the wire mesh. After the wire mesh is bonded to the panel, it cools and contracts, thus tensioning the wire mesh. Tensioning helps to maintain uniformity of the wire mesh and to keep the first 402 and second 404 layers of wire mesh together during operation, thus giving the screen a finer cutting point. Tensioning the wire mesh also assists in conveying particles to the end of the screen. A slack screen will not convey particles as well, especially when heavily loaded.

Referring now to Figure 5, a perspective view of a portion of a screen 400 shows a layer of wire mesh 502, which includes wire mesh webs 402, 404 and 405 (Fig. 4) bonded to panel 302. Should a tear develop in wire mesh layer 502, the wire mesh surrounding the tear is cut from around the opening 304 in which the tear occurs. A plug 504 is then inserted into the opening in the screen to seal the screen.

Referring now to Figures 6 and 7, plug 504 is made of an elastic rubber or similar elastomeric material. Its width and length are very slightly larger than one of the openings 304. It has a flat top section surrounded on all sides by a skirt-like side edge 702. The side edge is adapted for enabling the plug to be manually inserted into one of the openings 304 and to seal securely against the side of the opening. The side edges have an outwardly tapering bottom section 704 and a channel 706. The tapering bottom section is sufficiently flexible to deflect inwardly under force of the edges of the opening when the plug is pushed into the opening. Deflection of the bottom of the sides pulls inwardly a lower edge of channel 706, thereby providing sufficient clearance to push the plug further down into an opening 304 to the point the upper edge of the channel engages the upper edge of the opening. The width of channel 706 is slightly larger than the thickness of the edge of an opening 304 (which includes the thickness of the panel and two layers of wire mesh). Therefore, the bottom tapering section 704 springs back, locking the plug into place and sealing it against the edges of the opening. Support ribs 708 provide lateral strength to the plug so that it does not deflect downward when loading during operation, in a manner that would pull the top edge of the channel away from the edge of the opening and allow the load to force the plug through the bottom of the opening.

Referring to Figure 8, the screen 400 is secured to a basket of a shaker (not shown) using cam latch 804. Cam latch 804 is secured to side wall 806 of the basket 802. A latching end of latching bar 808 extends through an opening in the wall to engage the top of screen and to force the screen against bracket 810. Handle 812 pivots about pin 814. U-bolt 816 is connected through rod 818. Rod 818 extends through handle 812. The other end of the U-bolt (not seen) is connected in a similar fashion to other end of the rod so that the U-bolt is permitted to swing about rod 818 under the handle 812. When handle 812 is pivoted upwardly, the saddle of the U-bolt lifts up on latching bar 808, causing the latching bar to pivot about pin 820 and press against the screen. Pulling down on handle 812 lowers the saddle of U-bolt 816, permitting the latching bar to pivot counter-clockwise and release the screen. To assist in quickly replacing the screen, slot 822 allows pin 820 to be moved back and thus allows the latching member 808 to be pulled behind the side of the basket.

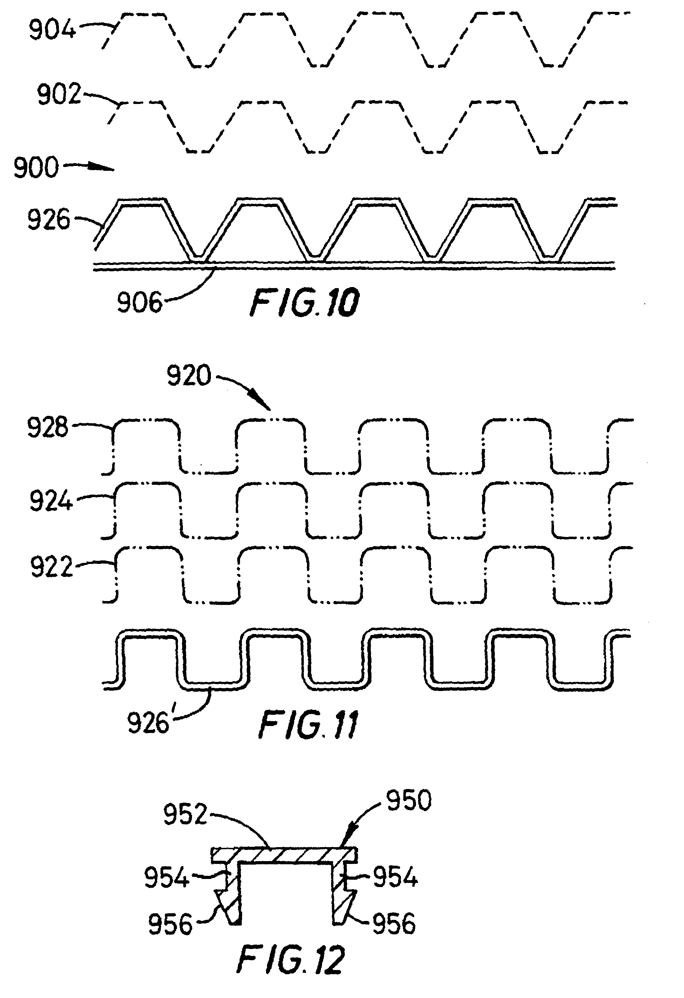

Fig. 10 shows a screen 900 like the screen 100 (Figs. 1, 2) with a similar length and width (see Fig. 2), but with a somewhat different screen shape as viewed from the end (e.g. as in Fig. 1). The screen 900 has a first layer of wire mesh 902 and a second layer of wire mesh web 904 mounted on a perforate panel 926. It is within the scope of this invention to use only one screening layer for any screen described herein or to use three or more layers. A frame 906 (like the frame of the screen 100) supports the mesh and/or screening layers. In one aspect the layers shown for the screen rest one on top of the other and in another aspect one or more or all of the layers are bonded together and in another aspect they are bonded to the frame across their entire surfaces or only around the periphery thereof. The frame 906 is configured and shaped to correspond to the corrugated or undulating shape of the layer(s) above it; alternatively the layer(s) may be made to correspond to the shape of the frame. Ridges 908 have relatively elongated flat tops as compared to the apices of the ridges of the screen 100 and flat valleys 912 of the frame 906 are relatively short as compared to the valleys of the screen 100. The elongate flat tops facilitate the insertion of an effective plug if the ridge is damaged. It is within the scope of this invention for the valleys to have any desired width or shape.

Fig. 11 shows a screen 920 like the screens 100 (Figs. 1, 2) and 900 with a similar length and width (see Fig. 2), but with a somewhat different screen shape as viewed from the end. The screen 920 has a first layer of wire mesh 922, a second layer of wire mesh web 924 and a third layer of mesh or screening 928. A panel 926' (like the panel of the screen 900) supports the mesh and/or screening layers. In one aspect the layers shown for the screen rest one on top of the other and in another aspect one or more or all of the layers are bonded together and in another aspect they are bonded to the frame across their entire surfaces or only around the periphery thereof. The screens 900 and 920 may be used with or without straps (e.g. as the straps 114 and 116, Fig. 9). Individual cells of the screens 900 and 920 may be shaped as the individual cells of the screens of Figs. 2 and 3 or they may be any desired shape, including but not limited to, oval, square, trapezoidal, or triangular (acute, obtuse, isosceles, congruent) . The cells of the screens 900 and 920 are repairable as are cells of the previously-described screens.

Fig. 12 shows a plug 950 for plugging off a cell of a screen according to the present invention. The plug 950 has a body member 952 and ears 956 which project from legs 954 depending on the body member 952. The plug 950 is made from a resilient material so the legs 954 are bendable to permit the ears 956 to enter a cell to be repaired and then expand outwardly so the ears catch and hold on an edge of the cell.

It is within the scope of this invention to have a plug held in a cell by friction fit, any "snap fit" structure, welding or adhesive. A plug may be any desired shape to fit in and mate with the shape of a cell. The plug may be solid or it may be solid with openings, holes or perforations therethrough. In one aspect in which a cell is not initially behind a torn screen area a cell or cells is placed at the torn cone area on one side of the screen and a plug is inserted into the cell from the other side of the screen to repair a torn area.

## Claims

1. A screen for use in a shale shaker, which screen (900; 920) comprises:
(a) a support panel formed with a series of alternating substantially parallel ridges and channels, wherein at least the top of one of said ridges is substantially flat and is provided with at least one elongate opening which is wholly contained within said top of said ridge; and
(b) at least a first layer of mesh bonded to said support member, the arrangement being such that, in use, if the mesh covering said elongate opening in said top of said ridge is punctured said mesh overlying said elongate opening can be removed and the open cell formed thereby fitted with a plug.

2. A screen as claimed in Claim 1, wherein the bottom of said channels are generally 'v'-shaped.

3. A screen as claimed in Claim 1, wherein the bottom of at least one of said channels is substantially flat and is provided with at least one elongate opening which is wholly contained within said channel, the arrangement being such that, in use, if the mesh covering said elongate opening in said channel is punctured said mesh overlying said elongate opening can be removed and the open cell formed thereby fitted with a plug.

4. A screen as claimed in Claim 1, 2 or 3, wherein said channels and said ridges include sides, at least one of which is provided with at least one elongate opening which is wholly contained within said channel, the arrangement being such that, in use, if the mesh covering said elongate opening in said side is punctured said mesh overlying said elongate opening can be removed and the open cell formed thereby fitted with a plug.

5. A screen as claimed in Claim 4, wherein no elongate opening extends across a side and the top of a ridge.

6. A screen as claimed in Claim 4, wherein no elongate opening extends across a side and the bottom of a channel.

7. A screen as claimed in any preceding claim, further comprising a second layer of mesh bonded to said support plate.

8. A screen as claimed in Claim 7, further comprising a third layer of mesh bonded to said support plate.

9. A method of repairing a screen as claimed in any preceding Claim, which method comprises the steps of removing damaged mesh overlying an elongate opening in a support panel, and inserting a plug into said elongate opening.

## Patentansprüche

1. Sieb zur Verwendung in einer Schlammschüttelsiebvorrichtung, wobei das Sieb (900; 920) umfaßt:
(a) eine Tragplatte, die mit einer Reihe abwechselnder, im wesentlichen paralleler Rippen und Kanäle versehen ist, wobei wenigstens die Oberseite einer der Rippen im wesentlichen eben ist und mit wenigstens einer länglichen Öffnung versehen ist, die vollständig in der Oberseite der Rippe enthalten ist; und
(b) wenigstens eine erste Maschenwerkschicht, die mit dem Tragelement verbunden ist, wobei die Anordnung derart ist, daß im Gebrauch dann, wenn das die längliche Öffnung in der Oberseite der Rippe abdeckende Maschenwerk durchstochen wird, das über der länglichen Öffnung liegende Maschenwerk abgenommen werden kann und in die dadurch gebildete offene Zelle ein Stopfen eingesetzt werden kann.

2. Sieb nach Anspruch 1, wobei die Böden der Kanäle im allgemeinen "v"-förmig sind.

3. Sieb nach Anspruch 1, wobei der Boden wenigstens eines der Kanäle im wesentlichen eben ist und mit wenigstens einer länglichen Öffnung versehen ist, die vollständig im Kanal enthalten ist, wobei die Anordnung derart ist, daß im Gebrauch dann, wenn das die längliche Öffnung im Kanal abdeckende Maschenwerk durchstochen wird, das über der länglichen Öffnung liegende Maschenwerk abgenommen werden kann und in die dadurch gebildete offene Zelle ein Stopfen eingesetzt werden kann.

4. Sieb nach Anspruch 1, 2 oder 3, wobei die Kanäle und die Rippen Seiten enthalten, wovon wenigstens eine mit wenigstens einer länglichen Öffnung versehen ist, die vollständig in dem Kanal enthalten ist, wobei die Anordnung derart ist, daß im Gebrauch dann, wenn das die längliche Öffnung in der Seite abdeckende Maschenwerk durchstochen wird, das über der länglichen Öffnung liegende Maschenwerk abgenommen werden kann und in die dadurch gebildete offene Zelle ein Stopfen eingesetzt werden kann.

5. Sieb nach Anspruch 4, wobei sich über eine Seite und die Oberseite einer Rippe keine längliche Öffnung erstreckt.

6. Sieb nach Anspruch 4, wobei sich über eine Seite und den Boden eines Kanals keine längliche Öffnung erstreckt.

7. Sieb nach einem vorhergehenden Anspruch, ferner mit einer zweiten Maschenwerkschicht, die mit der Tragplatte verbunden ist.

8. Sieb nach Anspruch 7, ferner mit einer dritten Maschenwerkschicht, die mit der Tragplatte verbunden ist.

9. Verfahren zum Reparieren eines Siebs nach einem vorgehenden Anspruch, wobei das Verfahren die Schritte des Abnehmens des über einer länglichen Öffnung in einer Tragplatte liegenden beschädigten Maschenwerks und des Einsetzens eines Stopfens in die längliche Öffnung umfaßt.

## Revendications

1. Tamis à utiliser dans un tamis vibrant, tamis (900 ; 920) qui comprend :
(a) un panneau de support formé avec une série de nervures et de gorges alternées, essentiellement parallèles , dans lequel au moins le sommet d'une desdites nervures est essentiellement plat et est pourvu d'au moins une ouverture de forme allongée qui est totalement contenue dans ladite partie de dessus de ladite nervure ; et
(b) au moins une première couche de grillage fixée audit élément de support, l'agencement étant tel que, en fonctionnement, si le grillage recouvrant ladite ouverture de forme allongée dans ladite partie de dessus de ladite nervure est percée, ledit grillage recouvrant ladite ouverture de forme allongée peut être enlevé et la cellule ouverte, formée de ce fait, obturée par un bouchon.

2. Tamis selon la revendication 1, dans lequel le fond desdites gorges est généralement configurée en "V".

3. Tamis selon la revendication 1, dans lequel le fond d'au moins l'une desdites gorges est essentiellement plat et est doté d'au moins une ouverture de forme allongée qui est totalement contenue dans ladite gorge, l'agencement étant tel que, à l'utilisation, si le grillage recouvrant ladite ouverture de forme allongée et ladite gorge est percée , ledit grillage recouvrant ladite ouverture de forme allongée peut être retiré et la cellule ouverte, formée de ce fait, obturée par un bouchon.

4. Tamis selon la revendication 1, 2 ou 3, dans lequel lesdites gorges et lesdites nervures comportent des côtés, dont l'un au moins, est pourvu d'au moins une ouverture de forme allongée qui est complètement contenue dans ladite gorge, l'agencement étant tel, qu'en utilisation, si le grillage recouvrant ladite ouverture de forme allongée dans ledit côté est percé, ledit grillage recouvrant ladite ouverture de forme allongée peut être enlevé et la cellule ouverte, constituée de ce fait obturée par un bouchon.

5. Tamis selon la revendication 4, dans lequel aucune ouverture de forme allongée ne s'étend à travers un côté et la partie supérieure d'une nervure.

6. Tamis selon la revendication 4, dans lequel aucune ouverture de forme allongée ne s'étend à travers un côté et le fond d'une gorge.

7. Tamis selon l'une quelconque des revendications précédentes , comprenant, de plus, une seconde couche de grillage fixée à ladite plaque de support.

8. Tamis selon la revendication 7, comprenant, de plus, une troisième couche de grillage fixée à ladite plaque de support.

9. Procédé de réparation d'un tamis selon l'une quelconque des revendications précédentes, lequel procédé comprend les étapes consistant à retirer le grillage endommagé recouvrant une ouverture de forme allongée dans un panneau de support, et à insérer un bouchon dans ladite ouverture de forme allongée.
